# EUROPEAN PATENT SPECIFICATION

(11) **EP 0 320 114 B1**
(45) Date of publication and mention of the grant of the patent: **31.03.1993**
(21) Application number: 88310389.7
(22) Date of filing: 04.11.1988
(51) Int. Cl.: C01B 33/34

(54) **Faujasite-type zeolite and process for making it**
Zeolith vom Faujasit-Typ und Verfahren zu dessen Herstellung
Zéolite de type faujasite et son procédé de préparation

(30) Priority: 19.11.1987 US 122789
(43) Date of publication of application: 14.06.1989
(73) Proprietor: EXXON RESEARCH AND ENGINEERING COMPANY, Florham Park, New Jersey 07932-0390 (US)
(72) Inventor: Strohmaier, Karl Gottlieb, Port Murray New Jersey 07862 (US); Vaughan, David Evan William, Flemington New Jersey 08822 (US)
(74) Representative: Somers, Harold Arnold

(56) References cited:
- US-A- 3 306 922
- US-A- 3 433 589
- US-A- 3 642 434
- US-A- 3 972 983
- US-A- 4 333 859
- US-A- 4 495 303

## Description

### FIELD OF THE INVENTION

The present invention relates to the directly synthesized high silica polymorph, designated as ECR-32, having the faujasite structure and containing organic tetrapropyl or tetrahydroxypropyl and/ or tetrabutyl or tetrahydroxybutyl ammonium ions. It also relates to a process for preparation of the zeolite. It may be employed in catalytic, absorbent or separation applications, particularly in cracking and hydrocracking catalysts.

### BACKGROUND OF THE INVENTION

Large pore zeolites with high silica to alumina ratios, i.e., of at least six, are desirable because of their particular catalytic selectivity and their thermal stability; the latter is a property particularly important when the zeolite is used as catalyst or in adsorption procedures wherein exposure to high temperatures would be expected. Although faujasite zeolites having silica to alumina ratios of less than six can be readily synthesized by a variety of methods, as disclosed, e.g., in U. S. Patent Nos. 2,882,244 and 4,178,352. Methods for preparing faujasite polymorphs of higher ratios generally involve several weeks of crystallization and result in poor yields of product, as reported by Kacirek, J. Phy. Chem., 79, 1589 (1975). One successful method results in a high silica faujasite that contains Cs⁺ cations trapped within the sodalite cage subunits of the structure and has a composition (Na, Cs)₂O: Al₂O₃: 5-7 SiO₂; See U.S. Patent 4,333,859. However, to remove the trapped Cs cations, several exchange and calcination treatments are required.

The use of quaternary ammonium salts as templates or reaction modifiers in the preparation of synthetic crystalline aluminosilicates (zeolites), first discovered by R. M. Barrer in 1961, has led to preparation of zeolites with high silica to alumina ratios which are not found in nature. For example, U. S. Patent No. US-A-4,046,859 discloses preparation of a crystalline zeolite thought to have the ferrierite structure (ZSM-21) using a hydroxyethyl-trimethyl sodium aluminosilicate gel. A review provided by Barrer in Zeolites, Vol. I, p. 136 (October, 1981) shows the zeolite types which are obtained using various ammonium organic bases as cation. In addition, Breck, Zeolite Molecular Sieves, John Wiley (New York, 1974), pp. 348-378, provides a basic review of zeolites obtained using such ammonium cations in the synthesis thereof, as does a review by Lok et al (Zeolites, 3, p 282 , 1983)).

The Si/Al ratios of a variety of readily synthesized NaY materials (SiO₂/Al₂O₃<6) can be increased by a wide range of chemical or physical chemical treatments. However, these processes usually involve removal of Al from the zeolite framework and creation of a metastable defect structure, followed by filling the defects with Si from another part of the structure by further chemical treatments or hydrothermal annealing. Typical treatments use steam, e.g., U.S. Patent 3,293,192; acid leaching, e.g., U.S. Patent 3,506,400; treatments with EDTA, e.g., U.S. Patent 4,093,560; treatment with SiCl₄ (Beyer and Belenykaja, Catalysis by Zeolites S, p. 203 (1980), Elsevier Press.); treated with CHF₃, i.e., 4,275,046; or treated with other chemicals. The products are often called 'ultra stable' faujasites (cf. Maher and McDaniel Proceedings Intl. Conference on Molecular Sieves, London, 1967) because of their very high thermal and hydrothermal stability. However, such chemical processing often yields variable products, requires multi-step processing, often using highly corrosive environments, and usually involves a yield debit in the form of partly collapsed or blocked zeolite product. Few of the modified materials have the product quality of the starting sample because the process of modification involves partial destruction of the lattice and/or deposition of detrital reaction products within the pores of the structure. This usually results in the development of a secondary meso pore structure (Lohse et al, Zeolites, 4, p 163 (1984)) which, although of some catalytic interest, will be less controlled and selective then the parent structure. Other methods of so called secondary synthesis using (NH₄)₂ SiF₆ in aqueous solution have also been demonstrated to yield higher silica zeolites (U.S. Patent 4,503,023). Methods of directly synthesizing high silica faujasites would therefore be useful in optimizing both the zeolite product and the process for its production.

Although the disclosed ECR-32 composition is quite thermally stable in its own right because of its high silica content, that thermal stability makes the inventive composition particularly useful as a starting material for the dealumination processes described above. Since the number of aluminum atoms in the framework of the inventive composition is lower than in zeolite Y, removal of these atoms causes less framework metastability during dealumination, allowing the formation of near pure silica faujasites.

The use of tetramethyl ammonium cations (TMA) in the synthesis of zeolites A, Y and ZSM-4 (mazzite) is known, e.g., U.S. Patent Nos. 3,306,922; 3,642,434; 4,241,036 and 3,923,639. In all these cases the TMA is trapped in the smaller cavities in the structures (sodalite or gmelinite cages), and must be burned out at high temperatures, often leading to lattice disruption and collapse. In most of these syntheses the SiO₂/Al₂O₃ ratio of the zeolites is less than about 6.

It is also known that even minor changes in the size or charge distribution of these large organic cations can induce the formation of different zeolite structures. U.S. Patent 4,046,859 teaches that replacement of one of the methyl groups of the TMA compound with a hydroxy ethyl group causes the formation of a ferrierite-like phase (ZSM-21). Many such examples are enumerated by Barrer (Zeolites, 1981). The objective of the present invention is to develop faujasite preparation methods yielding high silica materials, where the organic templates are not locked into the small cavities in the structure, but are instead present in the large "super cages" from which they can be readily removed without disruption and degradation of the host lattice. One such group of faujasite polymorphs designated ECR-4 (co-pending U.S. Application 606,940)* is made with a variety of "unbalanced" alkyl ammonium cations.
* US patent application Serial No. 606,940 has been published as US patent specification No. 4,714,601.

### SUMMARY OF THE INVENTION

According to the present invention a high silica crystalline polymorph (zeolite), designated for convenience herein as ECR-32, having the faujasite structure and a SiO₂/Al₂O₃ mole ratio of at least six can be readily prepared which contains organic templates of tetrapropyl or tetrahydroxypropyl, and/or tetrabutyl or tetrahydroxybutyl ammonium ions, within the large cages of the aluminosilicate. The chemical composition for this zeolite, expressed in terms of mole ratios of oxides, is in the range:

0.2 to 0.8 T₂O:0.2 to 0.8Na₂O:Al₂O₃:6 to 15SiO₂:xH₂O

wherein T represents tetrapropyl and or tetrabutyl-ammonium organic cation, and x represents 0 or an integer from 1 to 25, depending on composition and degree of hydration. The more preferred composition for the zeolite is in the range: 0.4 to 0.8 T₂O:0.2 to 0.6 Na₂O:Al₂O₃:6 to 12 SiO₂:xH₂O. The most preferred composition has the same molar oxide ratio as does the more preferred composition save the SiO₂/Al₂O₃ ratio which is 8 to 12.

The aluminosilicate herein may be used as a sorbent or as a catalyst, e.g., as a hydrocarbon conversion catalyst for, e.g., cracking, hydrocracking, reforming, paraffin isomerization, aromatization, and alkylation. When the product is used as a catalyst, it may be exchanged with cations from Groups II through VIII of the Periodic Table to remove the excess sodium ions which may be undesirable. Even after this ion exchange some of the alkyl or hydroxyalkylammonium cations will remain trapped in the super cages of the faujasite structure. Those cations may be removed by calcination.

In another embodiment of this invention the novel aluminosilicate may be prepared by a process comprising:
(a) preparing a reaction mixture comprising an oxide of sodium, a tetrapropyl or tetrahydroxypropyl and/or tetrabutyl or tetrahydroxybutyl ammonium salt, water, a source of silica, a source of alumina, and sodium aluminosilicate nucleating seeds, said reaction mixture having a composition, in terms of mole ratios of oxides, within the following ranges:

| | |
|---|---|
| (Na,T)₂O:Al₂O₃ | 3 to 15 |
| SiO₂:Al₂O₃ | 9 to 36 |
| H₂O:Al₂O₃ | 120 to 500 |

where T represents a tetra-alkyl or hydroxyalkyl ammonium cation, and said seeds being present in an amount to yield 0.1 to 20 (e.g., 0.1 to 10) mole percent of the total final alumina content in said aluminosilicate;
(b) blending the reaction mixture sufficiently to form a substantially homogeneous mixture;
(c) maintaining the reaction mixture at a temperature between 90°C and 160°C under autogenous pressure for a sufficient period of time to form crystals of the aluminosilicate; and
(d) recovering the ECR-32 aluminosilicate crystals.

It will be understood that the compositions herein may contain some waters of hydration (the x value above) which may be at least partially removed when the zeolites are employed as sorbents or catalysts.

### BRIEF DESCRIPTION OF THE DRAWINGS

Figure 1 shows a typical x-ray diffraction spectrum for ECR-32.
Figure 2 shows weight loss curves (loss rate and total weight loss) as a function of temperature for ECR-32 containing tetrapropyl ammonium ions in the faujasite super cage. (Product of Example 1.)

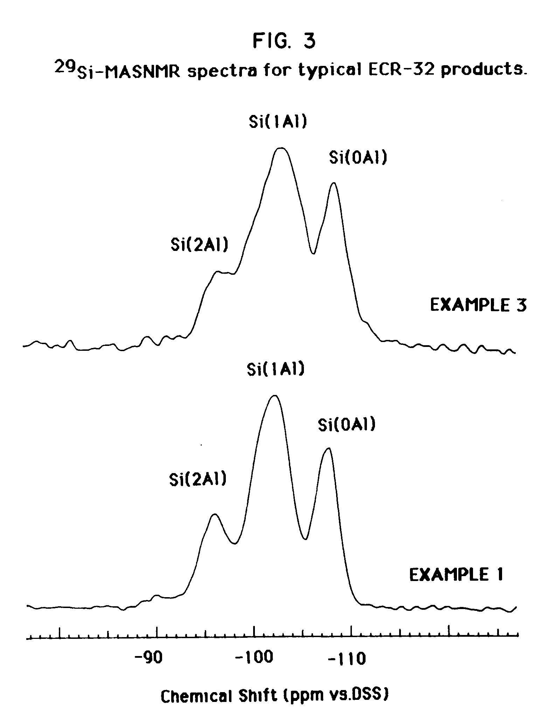

Figure 3 shows a comparison of ²⁹Si -MAS-NMR spectra for ECR-32 compositions made according to the examples 1 and 3.

### DESCRIPTION OF THE PREFERRED EMBODIMENTS

The aluminosilicate herein generally will have the formula, in terms of mole ratios of oxides, in the range:

0.2 to 0.8 T₂O:0.2 to 0.8 Na₂O:Al₂O₃:6 to 15 SiO₂:xH₂O

or preferably 0.40 to 0.80 T₂O:0.2 to 0.6 Na₂O:Al₂O₃:8 to 12 SiO₂:H₂O where x is 0-20 and T is an tetrapropyl ammonium carbon.

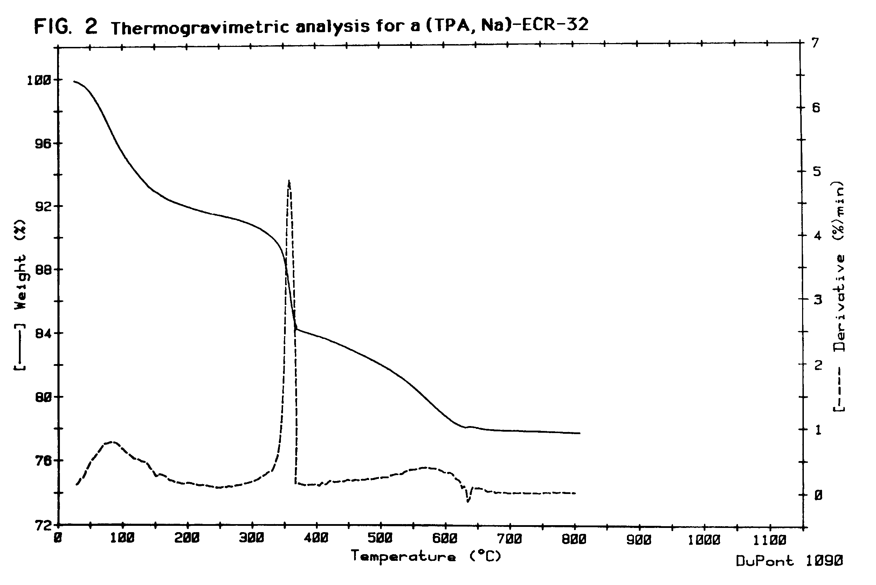

The tetrapropyl and tetrabutyl ammonium cations are relatively large ions which are not trapped within the small sodalite cages of the aluminosilicate faujasite structure, but are present in the super cages of the structure, as shown by the low temperature at which the organic template is removed from the super-cage (Fig. 2).

Minor variations in the mole ratios of the oxides within the ranges given in the chemical formulas above do not substantially alter the structure or properies of the zeolite. In addition, the number of waters of hydration x in the formula will not be the same for each preparation and will depend mainly on the degree to which the aluminosilicate is dried, and the amount of template.

In order to convert the inventive high silica faujasitic zeolites into catalysts, the organic ions in the "super cage" of the zeolite are first exchanged, desorbed or degraded at high temperature. By comparison to other zeolites having ammonium ions trapped in their smaller cages, the temperature of calcination is significantly lower. As even large decomposition organic fragments may easily diffuse through the large pores of the zeolite ECR-32, bond breakage and lattice degradation associated with the escape of such fragments from the smaller cages is not observed in ECR-32.

The exchangeable cations which may partially or fully replace the sodium ions wherever they may be found and the organic ammonium ions in the large cages of the faujasite structure may be cations of metals from any one of Groups I through VIII of the Periodic Table including rare earth metals, depending on the end use desired. Preferably, the cations will be mono-, di-and trivalent metal cations, particularly from Groups I, II or III of the Periodic Table, such as barium, calcium, cesium, lithium, magnesium, potassium, strontium, zinc, or the like, or hydrogen, rare earth metals, or ammonium ions. The presence of these exchangeable cations will generally not cause a substantial alteration of the basic crystal structure of the aluminosilicate. Particularly preferred are mono-and divalent cations, as they are more easily included in the pores of the zeolite crystal. Any ion exchange technique may be employed such as those discussed, for example, in U. S. Patent No. 3,216,789.

The aluminosilicate herein may be prepared by a process in which a reaction mixture, generally a slurry, is formed comprised of an oxide of sodium, water, the organic ammonium salt, a source of silica, a source of alumina, and sodium zeolitic (aluminosilicate) nucleating seeds. The oxide of sodium may be, e.g., sodium hydroxide, and the organic ammonium salt may be a sulfate, nitrate, hydroxide or halide salt, and is preferably a halide such as the chloride, iodide or bromide salt because of lower cost. The silica may be derived from sources such as, e.g., silica gels, silicic acid, aqueous colloidal silica sols as described, for example, in U. S. Patent No. 2,574,902, reactive amorphous solid silicas such as fume silicas and chemically precipitated silica sols, and potassium or sodium silicate, preferably sodium silicate. The alumina may be derived from sources such as, e.g., activated alumina, alumina trihydrate, sodium aluminate, alum, kaolin, metakaolin or the like. It is noted that the sodium oxide may be provided not only directly by adding, e.g., sodium hydroxide to the mixture, but also indirectly from the source of silica and/or the source of alumina if, for example, sodium silicate and sodium aluminate (prepared by dissolving NaOH and Al₂O₃·3H₂O in water) are respectively employed as at least one of the silica and alumina sources. The preferred sources of alumina are hydrated alumina and an aluminum salt selected from the chloride, sulfate and nitrate salts.

The aluminosilicate nucleating seeds for the reaction mixture, also known as zeolitic nucleation centers, comprise of a slurry of zeolite solids having the following components: SiO₂, Al₂O₃, Na₂O and H₂O. Generally, the seeds will have an average particle size less than 0.05 microns. The composition of the nucleating seeds in the slurry may be in the approximate ranges, in terms of mole ratios of oxides, as follows:

4 to 30 Na₂O:1 to 9 Al₂O₃:3 to 30 SiO₂:250 to 2000 H₂O

Such slurries of nucleating seeds may be prepared by the process disclosed in U. S. Patent Nos. US-A-3,808,326 and 4,178,352. In general, the preparation procedure involves mixing of sodium silicate, sodium aluminate and water together and aging the resulting slurry at about 0 to 90°C for about 1 to 500 hours, with lower temperatures requiring a longer period of time. Preferably, the slurry is aged at about 15 to 40°C for about 20 to 400 hours and the zeolite centers have compositions in the range:

10 to 16 Na₂O:1 to 9 Al₂O₃:10 to 15 SiO₂:250 to 2000 H₂O.

The amount of nucleating seeds present in the reaction mixture is expressed in terms of the Percentage of the total molar alumina content in the aluminosilicate product which is ultimately recovered on crystallization. Thus, for example, if 5 molar percent of the nucleating seeds is added to the mixture, the seeds are contributing 5% of the total molar amount of alumina in the zeolite product recovered. In general, the seeds are present in an amount to yield 0.1 to 20 mole percent of the total final alumina content of the product, and preferably 2 to 10 mole percent.

Slurries comprising recycled products of the process disclosed herein will also serve as nucleation seeds.

The relative amounts of ingredients in the reaction mixture will be such that the mixture has a composition, in terms of mole ratios of oxides, within the following ranges:

| Oxide Constituents | Ranges of Mole Ratios |
|---|---|
| (Na,T)₂O:Al₂O₃ | 3 to 15 |
| SiO₂:Al₂O₃ | 9 to 36 |
| H₂O:Al₂O₃ | 120 to 500 |

where T represents an organic ammonium group as described above. Preferably, the mole ratio of H₂O to Al₂O₃ in the reaction mixture ranges from 200 to 400, and the mole ratio of SiO₂ to Al₂O₃ from 15 to 30.

The order of mixing the ingredients is not essential, and all ingredients may be added simultaneously. In one preferred method of preparation a colloidal silica solution, a slurry of nucleating seeds and an organic ammonium halide solution are added to a blender, followed by slow addition, with mixing, of a sodium aluminate solution and an alum solution. Additional water is added to the resulting slurry. The reaction mixture is ordinarily prepared in a container made of glass, TEFLON (Trade Mark), or metal or the like which should be closed to prevent water loss.

After the reaction mixture is formed it may be homogenized by thorough blending so as to be substantially homogeneous in texture. This step is to ensure that the aluminosilicate product ultimately obtained is not a mixture of products and thus impure. The mixing may take place in any vessel in which complete mixing is effected, e.g., a blender, in line pump or other highly agitated system.

The homogenized mixture is then placed in a reactor, ordinarily one which can withstand elevated pressures such as a polytetrafluoroethylene-lined jar or an autoclave, where it is maintained at a temperature of between about 90°C and 160°C, preferably 90 and 140°C, For commercial purposes, preferably no greater than 140°C. The exact temperature will depend, for example, on the amount of sodium oxide present and the length of time employed for reaction. At temperatures above about 120°C, the zeolites obtained are no longer in substantially pure form. When the homogenized mixture is heated it is maintained at autogenous pressures which will depend on the temperature employed. Lower pressures of 1 atm may be adequate for temperatures at the lower range but at higher temperatures up to 160°C pressures of up to about 3 to 10 atm or higher may be achieved. The amount of time required for heating will depend mainly on the temperature employed, so that at 100°C the heating may be carried out, e.g., for up to 80 days or more, whereas at, e.g., 120°C or more the time period may be, e.g.,4 to 15 days. In any event, the heating is carried out until crystals are formed of the aluminosilicate zeolite product, i.e., ECR-32, having a faujasite structure, a mole ratio of SiO₂/Al₂O₃ of at least six and the presence of organic ammonium templates removable below about 400°C as shown by thermogravimetric analysis.

The crystallization time may be shortened, if desired, by seeding the slurry before or after the blending step with minor amounts of zeolite ECR-32 crystals of this invention which are preferably chopped at low temperatures and a size range less than about .05 µm before that seeding.

When the aluminosilicate crystals have been obtained in sufficient amount, they are recovered by centrifugation or filtration from the reaction mixture and are then washed, preferably with deionized water, to separate them from the mother liquor. The washing should continue, for best purity results, until the wash water, equilibrated with the product, has a pH of between about 9 and 12. After the washing step the zeolite crystals may be dried as in a kiln.

The aluminosilicate ECR-32 of this invention may be used as a sorbent or as a catalyst, e.g., in a hydrocarbon conversion process such as in paraffin isomerization, aromatization, and alkylation and in the reforming, hydrocracking and cracking of lube stocks, fuels and crude oils. To be employed for these applications, the aluminosilicate may be at least partially dehydrated by drying at temperatures of up to about 500°C or more until most or all of the water of hydration is removed.

### ANALYTICAL PROCEDURES

A zeolite may be definitively identified by its x-ray diffraction pattern and chemical composition obtained by a variety of bulk chemical analyses. The unit cell measurement for various faujasites, in particular, has become a measurement (ASTM method D-3942-80) standardized to reflect the Si/Al ratio of the pure sodium form synthetic faujasite, e.g., D. W. Breck and E. M. Flanigen, "Molecular Sieves", Society of Chemistry and Industry, London, p. 47 (1968); E. Dempsey et al, J. Phys. Chem., 73, (1969), p. 387. Unfortunately, substitution of cations other than Na⁺ into faujasite renders the established "unit cell vs. composition" relationships valueless. Since ECR-32 contains organic cations in addition to Na⁺, unit cell correlations obtained by these methods have little value, until the said ECR-32 is first purged of the organic template, then sodium exchanged. Such values for Na-ECR-32 are included in the examples.

A valuable indirect measurement of Si/Al ratio has been developed recently which, to a first approximation, is not significantly influenced by variable cation contents. Known as ²⁹Si- magic angle spinning nuclear magnetic resonance (MAS-NMR), it measures the relative number of Si atoms surrounded by 4 Al, (3Al + 1Si), (2Al + 2Si), (1Al + 3Si) and 4Si, from which the total average Si/Al ratio can be readily calculated (Melchior et al., J. Amer. Chem. Soc., v. 104, p. 4859, (1982)). Compared with the conventional Y faujasite, ECR-32 compositions may clearly be differentiated on the basis of relative peak values, vis., in the case of ECR-32 the number of Si atoms having zero and one Al neighbors is greater than the number of Si atoms having 2 and 3 Al neighbors. For zeolite Y the reverse is true.
- ECR-32:: Si(0Al) + Si(1Al) > Si(2Al) +Si(3Al)
- Zeolite Y:: Si(0Al) + Si(1Al) < Si(2Al) + Si(3Al).
It should be apparent that ²⁹Si-MAS-NMR spectra give a more reliable indication of the number of Si and Al atoms in a sample then would a comparable bulk chemical test. The MAS-NMR ignores detrital or adsorbed and dissolved silicon and aluminum atoms since it measures those atoms only when they are in particular spatial relationship to each other. Bulk chemical tests have no way to make such a differentiation.

A further differentiating characteristic of ECR-32 is that the organic template is located in the "super cage" rather than the smaller sodalite cage. Although this can be demonstrated using ¹³C-MAS-NMR, it is also readily demonstrated by a simple thermogravimetric experiment in which a small sample is heated in a controlled fashion.

Typical weight loss curves as a function of temperature are shown in Figure 2 for ECR-32 containing tetrapropyl ammonium in the faujasite super cage. The low temperature weight loss (340°C) corresponding to the tetrapropyl ammonium release from the large faujasite cage is in distinct comparison with the high temperature weight loss (560°C) characteristic of release of a smaller tetramethyl ammonium template from a small cage in faujasite or mazzite.

### EXAMPLES

The examples which follow illustrate the efficacy of the invention. In all examples, parts and percentages are given by weight and temperatures in degrees Centigrade unless otherwise noted.

### Example 1

A reaction mixture having the following oxide composition:

3.6 (TPA)₂0:1.2 Na₂0:Al₂O₃:18 SiO₂:275 H₂O

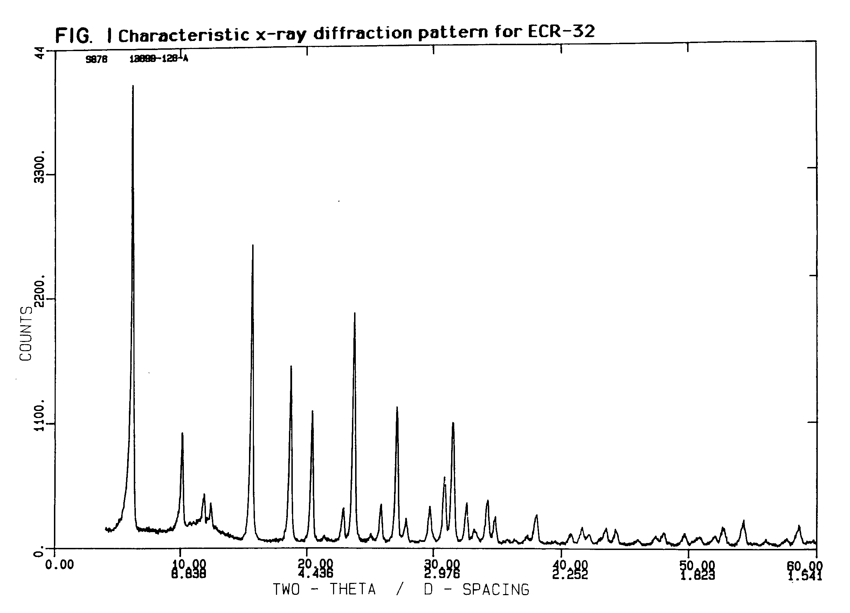

was made by first making a sodium aluminate solution by dissolving 9.0 gm NaOH and 11.5 gm aluminum oxide trihydrate in 15 mls H₂O. In a two liter plastic beaker were mixed 324.1 gm Ludox (Trade Mark) HS-40 silica (DuPont Co.) 83.6 gm of a "seed" solution (13.3 Na₂O:Al₂O₃:12.5 SiO₂:267 H₂O, see U.S. Patent Nos. 3,574,538 and 4,340,573), 471.6 gm of a 40% aqueous solution of tetra n-propylammonium hydroxide, sodium aluminate solution, and 27.5 gm of Al2(SO4)3.17H₂O dissolved in 30 mls H₂O. The total weight of the mixture was adjusted to 1000 g by the addition of distilled H₂O, and then thoroughly homogenized in a blender. The white slurry was placed in a teflon bottle and then reacted in an air oven at 100°C for 8 days. The product was recovered by filtration, washed with distilled water and dried in an 115°C oven. Analysis by x-ray powder diffraction, as listed in Table 1 and shown in Fig. 1, showed the sample to be excellent ECR-32. Thermogravametric analysis showed a TPA weight loss of 13.5% at 358°C and 570°C and a total TPA plus H₂O loss of 22.3%. Elemental analysis by ICP-AES gave an overall chemical composition of:

.35 (TPA)₂0:.68 Na₂O:Al₂O₃:9.5 SiO₂

A portion of this sample was calcined in air at 600°C for 4 hours. The calcined sample absorbed 19.5% n-hexane at 45 torr (6 kPa). Exchange of this calcined sample with sodium chloride solution yielded a product having a cubic unit cell of 24.48Å (2.448 nm), using the method of ASTM-D3942-80.

**Table 1**

| No. | 2-Theta (degree) | d (mx10⁻¹⁰) | Relative Intensity |
|---|---|---|---|
| 1 | 6.26 | 14.12 | 100 |
| 2 | 10.20 | 8.67 | 20 |
| 3 | 11.94 | 7.41 | 7 |
| 4 | 12.49 | 7.08 | 7 |
| 5 | 15.73 | 5.63 | 58 |
| 6 | 18.77 | 4.723 | 34 |
| 7 | 20.45 | 4.339 | 25 |
| 8 | 22.91 | 3.878 | 8 |
| 9 | 23.77 | 3.740 | 48 |
| 10 | 25.94 | 3.433 | 8 |
| 11 | 27.19 | 3.276 | 30 |
| 12 | 27.92 | 3.193 | 6 |
| 13 | 29.79 | 2.996 | 8 |
| 14 | 30.92 | 2.890 | 15 |
| 15 | 31.57 | 2.831 | 29 |
| 16 | 32.65 | 2.740 | 8 |
| 17 | 33.30 | 2.688 | 4 |
| 18 | 34.28 | 2.614 | 9 |
| 19 | 34.89 | 2.570 | 6 |
| 20 | 38.12 | 2.359 | 9 |
| 21 | 40.77 | 2.211 | 3 |
| 22 | 41.66 | 2.166 | 4 |
| 23 | 42.19 | 2.140 | 3 |
| 24 | 43.50 | 2.079 | 5 |
| 25 | 44.32 | 2.042 | 4 |
| 26 | 46.08 | 1.968 | 2 |
| 27 | 47.46 | 1.914 | 2 |
| 28 | 48.10 | 1.890 | 5 |
| 29 | 49.73 | 1.832 | 4 |
| 30 | 50.89 | 1.793 | 3 |
| 31 | 52.08 | 1.755 | 3 |
| 32 | 52.78 | 1.733 | 6 |
| 33 | 54.35 | 1.687 | 8 |
| 34 | 56.13 | 1.637 | 3 |
| 35 | 57.72 | 1.596 | 2 |
| 36 | 58.66 | 1.573 | 6 |

### Example 2

A reaction mixture having the following oxide composition:

4.8 (TPA)₂0:1.6 Na₂O:Al₂O₃:24 SiO₂:350 H₂O

was made by first making a sodium aluminate solution by dissolving 27.6 gm NaOH and 35.0 gm aluminum oxide trihydrate in 35 mls H₂O. This was diluted with H₂O to a final weight of 121.5 gm. In a 250 ml plastic beaker were mixed 43.02 gm Ludox HS-40 silica (DuPont Co.), 8.17 gm of a "seed" solution (13.33 Na2O:Al2O3:12.5 SiO₂:267 H2O, see U.S. Patent nos. 3,574,538 and 4,340,573), 61.44 gm of a 40% aqueous solution of tetra n-propylammonium hydroxide, 4.48 gm of sodium aluminate, solution, and 1.94 gm of Al₂(SO₄)₃:17 H₂O dissolved in 2.31 mls H₂O. The total weight of the mixture was adjusted to 125 gm by the addition of distilled H₂O and then thoroughly homogenized in a blender. The white slurry was placed in a teflon bottle and then reacted in an air oven at 100°C for 58 days. The product was recovered by filtration, washed with distilled water and dried in an 115°C oven. Analysis by x-ray powder diffraction showed the sample to be excellent ECR-32 with a minor impurity. Thermogravametric analysis showed a TPA weight loss of 15.7% at 365°C and 580°C and a total TPA plus H₂O loss of 22.6%. Elemental analysis by ICP-AES gave an overall chemical composition of:

0.45 (TPA)₂0:0.44 Na₂O:Al₂O₃:11.16 SiO₂

A portion of this sample was calcined in air at 600°C for 4 hours. The calcined sample absorbed 19.3% n-hexane at 45 torr (6 kPa). Exchange of this calcined sample with sodium chloride solution yielded a material having a cubic unit cell of 24.45Å (2.445 nm).

### Example 3

A reaction mixture having the following oxide composition:

3.6 (TBA)₂O:1.2 Na₂O:Al₂O₃:18 SiO₂:300 H₂O

was made by first making a sodium aluminate solution by heating 7.85 gm. NaOH and 10.0 gm. aluminum oxide trihydrate in 13 mls H₂O until the alumina dissolved. This solution was diluted to 33.8 g. with distilled water. In a 600 ml. plastic beaker were mixed 80.3 gm. Ludox (Trade Mark) HS-40 silica (DuPont Co.), 20.7 gm. of a "seed" solution (13.33 Na₂O:Al₂O₃:12.5 SiO₂:267 H₂O, see U.S. Patent nos. 3,574,538 and 4,340,573). 149.0 gm. of a 40% aqueous solution of tetra n-butylammonium hydroxide, 9.6 grams of sodium aluminate solution, and 6.82 gm. of Al₂(SO₄)₃:17 H₂O dissolved in 8.4 mls. H₂O. The total weight of the mixture was adjusted to 275 gm with H₂O and thoroughly homogenized in a blender. The white slurry was placed in a Teflon (Trade Mark) bottle and then reacted in an air oven at 100°C for 25 days. The product was recovered by filtration, washed with distilled water and dried in an 115°C oven. Analysis by x-ray powder diffraction, as listed in Table 2, showed the sample to be excellent ECR-32. Thermogravametric analysis showed a TBA weight loss of 14.1% at 325° and 556°C burn off of residual carbon, and a total TBA plus H₂O loss of 22.8%. Elemental analysis by ICP-AES gave an overall chemical composition of:

0.25 (TBA)₂O: 0.60 Na₂O:Al₂O₃:8.48 SiO₂

A portion of this sample was calcined in air at 600°C for 4 hours. The calcined sample absorbed 20.0% n-hexane at 45 torr (6 kPa). Exchange of this calcined sample with sodium chloride solution yielded a product having a cubic unit cell of 24.51Å (2.451 nm).

**Table 2**

| No. | 2- Theta (degree) | d (mx10⁻¹⁰) | Relative Intensity |
|---|---|---|---|
| 1 | 6.23 | 14.19 | 100 |
| 2 | 10.17 | 8.69 | 19 |
| 3 | 11.93 | 7.41 | 6 |
| 4 | 12.45 | 7.10 | 4 |
| 5 | 15.70 | 5.64 | 31 |
| 6 | 18.75 | 4.73 | 18 |
| 7 | 20.43 | 4.342 | 18 |
| 8 | 21.72 | 4.088 | 3 |
| 9 | 22.87 | 3.886 | 7 |
| 10 | 23.73 | 3.747 | 36 |
| 11 | 25.88 | 3.440 | 5 |
| 12 | 27.14 | 3.283 | 20 |
| 13 | 28.04 | 3.180 | 7 |
| 14 | 29.74 | 3.001 | 5 |
| 15 | 30.85 | 2.896 | 9 |
| 16 | 31.50 | 2.837 | 17 |
| 17 | 32.57 | 2.747 | 6 |
| 18 | 33.37 | 2.683 | 3 |
| 19 | 34.21 | 2.619 | 5 |
| 20 | 34.79 | 2.577 | 4 |
| 21 | 38.02 | 2.365 | 5 |
| 22 | 40.70 | 2.215 | 2 |
| 23 | 41.56 | 2.171 | 3 |
| 24 | 43.41 | 2.083 | 4 |
| 25 | 44.23 | 2.046 | 4 |
| 26 | 44.98 | 2.014 | 3 |
| 27 | 50.78 | 1.796 | 2 |
| 28 | 52.65 | 1.737 | 3 |
| 29 | 54.22 | 1.576 | 4 |
| 30 | 58.51 | 1.576 | 4 |

## Claims

1. A zeolite having a faujasite structure a silica/alumina ratio of at least 6 and containing tetrapropyl or tetrahydroxypropyl and/or tetrabutyl or tetrahydroxybutyl ammonium cations in the supercages of said zeolite.

2. The aluminosilicate of claim 1 having a composition, in terms of mol ratios of oxides, in the range:
0.2 to 0.80T₂O:0.20 to 0.8Na₂O:Al₂O₃:6 to 15SiO₂:xH₂O
wherein T represents an organic ammonium template and x represents 0 or an integer in the range of from 1 to 20.

3. The aluminosilicate of claim 1 or claim 2 having a composition, in terms of mol ratios of oxides, in the range:
0.2 to 0.80 T₂O:0.20 to 0.8 Na₂O:Al₂O₃: 8 to 12 SiO₂
wherein T is a tetrapropyl or tetrahydroxypropyl ammonium and/or tetrabutyl or tetrahydroxybutyl ammonium cations.

4. A process for preparing the aluminosilicate of any one of claims 1 to 3 which comprises:
(a) preparing a reaction mixture comprising an oxide of sodium, a tetrapropyl or tetrahydroxypropyl and/or tetra hydroxybutyl or tetrabutyl organic ammonium salt, water, a source of silica, a source of alumina, and sodium aluminosilicate nucleating seeds, said reaction mixture having a composition, in terms of mole ratios of oxides, within the following ranges:
| | |
|---|---|
| (Na,T)₂O:Al₂O₃ | 3 to 15 |
| SiO₂:Al₂O₃ | 9 to 36 |
| H₂O:Al₂O₃ | 120 to 500 |
where T represents the cation of an organic ammonium template, and said seeds being present in an amount to yield 0.1 to 20 mole percent of the total final alumina content in said aluminosilicate;
(b) blending the reaction mixture sufficiently to form a substantially homogeneous mixture;
(c) maintaining the reaction mixture at between 90°C and 160°C under autogenous pressure for a sufficient period of time to form crystals of said aluminosilicate; and
(d) recovering said aluminosilicate crystals.

5. The process of claim 4 wherein the source of silica is a colloidal silica and the sources of alumina are hydrated alumina and an aluminum salt selected from the group consisting of the chloride, sulfate and nitrate salts.

6. The process of claim 4 or claim 5 wherein the seeds are present in an amount to yield 0.1 to 10 mole percent of the total final alumina content.

7. A process for preparing an aluminosilicate having a faujasite structure, a silica to alumina mole ratio of at least six, and tetrapropyl ammonium ions within the super cages of said aluminosilicate which comprises the steps of:
(a) preparing a reaction mixture comprising sodium aluminate, alum, water, sodium silicate, aluminum sulfate, tetrapropyl ammonium hydroxide or halide and nucleating seeds of about the composition 13.33Na₂O:Al₂O₃:15SiO₂:320H₂O, said reaction mixture having a composition, in terms of mole ratios of oxides, within the following ranges:
| | |
|---|---|
| (Na,T)₂O:Al₂O₃ | 4 to 8 |
| SiO₂:Al₂O₃ | 15 to 30 |
| H₂O:Al₂O₃ | 120 to 450 |
wherein T represents tetrapropyl ammonium and said seeds being present in an amount to yield 0.1 to 20 mole percent of the total final alumina content in said aluminosilicate;
(b) blending the reaction mixture sufficiently to form a substantially homogeneous mixture;
(c) maintaining the reaction mixture between 90 and 130°C under autogenous pressure for a sufficient period of time to form crystals of said aluminosilicate; and
(d) recovering said aluminosilicate crystals.

8. A process of claim 7 in which the organic template is a tetrabutyl ammonium salt.

9. The process of claim 7 in which the organic template comprises a mixture of tetrapropyl and tetrabutyl ammonium salts.

10. The process of any one of claims 7 to 9 wherein the aluminosilicate has a composition, in terms of mole ratios of oxides, in the range:
0.2 to 0.80T₂O:0.2 to 0.8Na₂O:Al₂O₃:8 to 12SiO₂:xH₂O
wherein T represents a tetrapropyl or tetrabutyl ammonium group and x represents 0 or an integer from 1 to 25.

## Patentansprüche

1. Zeolith mit Faujasitstruktur und einem Siliciumdioxid/Aluminiumoxid-Verhältnis von mindestens 6, der in den Superkäfigen des Zeoliths Tetrapropyl- oder Tetrahydroxypropyl- und/oder Tetrabutyl- oder Tetrahydroxybutylammoniumkationen enthält.

2. Aluminiumsilikat nach Anspruch 1 mit einer in Molverhältnissen von Oxiden ausgedrückten Zusammensetzung im Bereich von
0,2 bis 0,80 T₂O : 0,20 bis 0,8 Na₂O : Al₂O₃ : 6 bis 15 SiO₂ : x H₂O,
wobei T eine organische Ammoniumschablonenverbindung ist und x 0 oder eine Zahl im Bereich von 1 bis 20 ist.

3. Aluminosilikat nach Anspruch 1 oder Anspruch 2 mit einer in Molverhältnissen von Oxiden ausgedrückten Zusammensetzung von
0,2 bis 0,80 T₂O : 0,20 bis 0,8 Na₂O : Al₂O₃ : 8 bis 12 SiO₂,
wobei T für Tetrapropyl- oder Tetrahydroxypropylammonium- und/oder Tetrabutyl- oder Tetrahydroxybutylammoniumkationen steht.

4. Verfahren zur Herstellung des Aluminosilikats gemäß einem der Ansprüche 1 bis 3, bei dem
(a) eine Reaktionsmischung hergestellt wird, die ein Oxid des Natriums, ein organisches Tetrapropyl- oder Tetrahydroxypropyl- und/oder Tetrabutyl- oder Tetrahydroxybutylammoniumsalz, Wasser, eine Siliciumdioxidquelle, eine Aluminiumoxidquelle und Natriumaluminosilikatkristallisationskeime umfaßt, wobei die Reaktionsmischung eine in Molverhältnissen von Oxiden ausgedrückte Zusammensetzung innerhalb der folgenden Bereiche aufweist:
| | |
|---|---|
| (NA,T)₂O : Al₂O₃ | 3 bis 15 |
| SiO₂ : Al₂O₃ | 9 bis 36 |
| H₂O : Al₂O₃ | 120 bis 500, |
wobei T das Kation einer organischen Anmoniumschablonenverbindung ist und die Keime in einer Menge vorhanden sind, um 0,1 bis 20 Mol% des gesamten Endaluminiumoxidgehalts in dem Aluminosilikat zu ergeben,
(b) die Reaktionsmischung ausreichend gemischt wird, um eine im wesentlichen homogene Mischung zu bilden,
(c) die Reaktionsmischung zwischen 90°C und 160°C unter autogenem Druck ausreichend lange gehalten wird, um Kristalle des Aluminosilikats zu bilden, und
(d) die Aluminosilikatkristalle gewonnen werden.

5. Verfahren nach Anspruch 4, bei dem die Siliciumdioxidquelle ein kolloidales Siliciumdioxid ist und die Aluminiumoxidquellen hydratisiertes Aluminiumoxid und ein Aluminiumsalz ausgewählt aus der Gruppe bestehend aus den Chlorid-, Sulfat- und Nitratsalzen sind.

6. Verfahren nach Anspruch 4 oder Anspruch 5, bei dem die Keime in einer Menge vorhanden sind, um 0,1 bis 10 Mol% des gesamten Endaluminiumoxidgehalts zu ergeben.

7. Verfahren zur Herstellung eines Aluminosilikats mit Faujasitstruktur, einem Siliciumdioxid/Aluminiumoxid-Molverhältnis von mindestens 6 und Tetrapropylammoniumionen in den Superkäfigen des Aluminosilikats, bei dem
(a) eine Reaktionsmischung hergestellt wird, die Natriumaluminat, Alaun, Wasser, Natriumsilikat, Aluminiumsulfat, Tetrapropylammoniumhydroxid oder -halogenid und Kristallisationskeime mit ungefähr der Zusammensetzung 13,33 Na₂O : Al₂O₃ : 15 SiO₂ : 320 H₂O umfaßt, wobei die Reaktionsmischung eine in Molverhältnissen von Oxiden ausgedrückte Zusammensetzung innerhalb der folgenden Bereiche aufweist:
| | |
|---|---|
| (NA,T)₂O : Al₂O₃ | 4 bis 8 |
| SiO₂ : Al₂O₃ | 15 bis 30 |
| H₂O : Al₂O₃ | 120 bis 450, |
wobei T für Tetrapropylammonium steht und die Keime in einer Menge vorhanden sind, um 0,1 bis 20 Mol% des gesamten Endaluminiumoxidgehalts in dem Aluminosilikat zu ergeben,
(b) die Reaktionsmischung ausreichend gemischt wird, um eine im wesentlichen homogene Mischung zu bilden,
(c) die Reaktionsmischung zwischen 90 und 130°C unter autogenem Druck ausreichend lange gehalten wird, um Kristalle des Aluminosilikats zu bilden, und
(d) die Aluminosilikatkristalle gewonnen werden.

8. Verfahren nach Anspruch 7, bei dem die organische Schablonenverbindung ein Tetrabutylammoniumsalz ist.

9. Verfahren nach Anspruch 7, bei dem die organische Schablonenverbindung eine Mischung aus Tetrapropyl- und Tetrabutyl-ammoniumsalzen umfaßt.

10. Verfahren nach einem der Ansprüche 7 bis 9, bei dem das Aluminosilikat eine in Molverhältnissen von Oxiden ausgedrückte Zusammensetzung im Bereich von
0,2 bis 0,80 T₂O : 0,2 bis 0,8 Na₂O : Al₂O₃ : 8 bis 12 SiO₂ : x H₂O,
aufweist, wobei T eine Tetrapropyl- oder Tetrabutylamoniumgruppe ist und x 0 oder eine Zahl von 1 bis 25 ist.

## Revendications

1. Zéolite ayant une structure faujazite, présentant un rapport silice/alumine au moins égal à 6 et contenant des cations tétrapropyl- ou tétrahydroxypropyl- et/ou tétrabutyl- ou tétrahydroxybutyl ammonium dans les supercages de ladite zéolite.

2. L'aluminosilicate de la revendication 1, ayant une composition, en termes de rapports molaires d'oxydes, se situant dans la gamme :
0,2 à 0,80 T₂0:0,20 à 0,8 Na₂O:Al₂O₃:6 à 15 SiO₂: x H₂O
où T représente un gabarit ammonium organique et x est nul ou représente un nombre entier dont la valeur est dans la gamme de 1 à 20.

3. Aluminosilicate selon la revendication 1 ou la revendication 2, ayant une composition, en termes de rapports molaires d'oxydes, dans la gamme :
0,2 à 0,80 T₂0:0,20 à 0,8 Na₂O:Al₂O₃:8 à 12 SiO₂
où T représente un cation tétrapropyl ou tétrahydroxypropyl ammonium et/ou tétrabutyl ou tétrahydroxybutyl ammonium.

4. Procédé de préparation de l'aluminosilicate selon l'une quelconque des revendications 1 à 3, qui comprend :
(a) la préparation d'un mélange réactionnel comprenant un oxyde de sodium, un sel organique de tétrapropyl ou tétrahydroxypropyl et/ou tétrabutyl ou tétrahydroxybutyl ammonium, de l'eau, une source de silice, une source d'alumine et des germes de nucléation de type aluminosilicate de sodium, en termes de rapports molaires d'oxydes se situant dans les gammes suivantes :
| | |
|---|---|
| (Na,T)₂O : Al₂0₃ | 3 à 15 |
| SiO₂ : Al₂O₃ | 9 à 36 |
| H₂O : Al₂O₃ | 120 à 500 |
où T représente un gabarit ammonium organique, lesdits germes de nucléation étant présents en une quantité donnant 0,1 à 20 moles % de la teneur finale en alumine dans cet aminosilicate ;
(b) le mélange du mélange réactionnel suffisant pour former un mélange essentiellement homogène ;
(c) le maintien du mélange réactionnel à une température comprise entre 90°C et 160°C sous la pression autogène pendant une période de temps suffisante pour former des cristaux dudit aluminosilicate ; et
(d) la récupération desdits cristaux d'aluminosilicate.

5. Procédé selon la revendication 4, dans lequel la source de silice est une silice colloïdale et les sources d'alumine sont constituées d'une alumine hydratée et d'un sel d'aluminium choisi dans l'ensemble consistant en sels de type chlorure, sulfate et nitrate.

6. Procédé selon la revendication 4 ou la revendication 5, dans lequel les germes sont présents en une quantité permettant d'atteindre 0,1 à 10 moles % de la teneur finale totale en alumine.

7. Procédé de préparation d'un aluminosilicate ayant une structure de faujasite, un rapport molaire de silice à alumine valant au moins 6 et des ions tétrapropylammonium dans les supercages dudit aluminosilicate, qui comprend les étapes consistant à
(a) préparer un mélange réactionnel comprenant de l'aluminate de sodium, de l'alun, de l'eau, du silicate de sodium, du sulfate d'aluminium, de l'hydroxyde ou un halogénure de tétrapropyl ammonium et des germes de nucléation ayant approximativement la composition 13,33 Na₂O:Al₂O₃15 SiO₂:320 H₂O ledit mélange réactionnel ayant pour composition, en termes de rapports molaires d'oxydes, se situant dans les gammes suivantes :
| | |
|---|---|
| (Na,T)₂O : Al₂0₃ | 4 à 8 |
| SiO₂ : Al₂O₃ | 15 à 30 |
| H₂O : Al₂O₃ | 120 à 450 |
où T représente un cation tétrapropyl ammonium et lesdits germes étant présents en une quantité permettant d'atteindre 0,1 à 20 moles % de la teneur finale totale en alumine dans ledit aluminosilicate ;
(b) mélanger le mélange réactionnel suffisamment pour former un mélange essentiellement homogène ;
(c) maintenir le mélange réactionnel entre 90 et 130°C sous la pression autogène pendant une période de temps suffisante pour former des cristaux dudit aluminosilicate ; et
(d) récupérer lesdits cristaux d'aluminosilicate.

8. Procédé selon la revendication 7, dans lequel le gabarit organique est un sel de tétrabutyl ammonium.

9. Procédé selon la revendication 7, dans lequel le gabarit organique comprend un mélange de sels de tétrapropyl et de tétrabutyl ammonium.

10. Procédé selon l'une quelconque des revendications 7 à 9, dans lequel l'aluminosilicate a pour composition, en termes de rapports molaires entre oxydes, se situant dans la gamme :
0,2 à 0,80 T₂0:0,2 à 0,8 Na₂O:Al₂O₃:8 à 12 SiO₂ : x H₂O
où T représente un groupe tétrapropyl ou tétrabutylammonium et x vaut 0 ou représente un nombre entier valant 1 à 25.
